# EUROPEAN PATENT SPECIFICATION

(11) **EP 2 851 328 B1**
(45) Date of publication and mention of the grant of the patent: **18.04.2018**
(21) Application number: 13791193.9
(22) Date of filing: 17.05.2013
(51) Int. Cl.: B66C 23/32, B66C 23/20, F03D 1/00

(54) **SELF-CLIMBING TELESCOPIC CRANE AND METHOD FOR MOUNTING PRE-FABRICATED CONCRETE TOWERS**
SELBSTKLETTERNDER TELESKOPKRAN UND VERFAHREN ZUR MONTAGE VON FERTIGBAUBETONTÜRMEN
GRUE TÉLESCOPIQUE AUTO-ESCAMOTABLE ET PROCÉDÉ DE MONTAGE DE TOURS PRÉFABRIQUÉES EN BÉTON

(30) Priority: 18.05.2012 ES 201230754
(43) Date of publication of application: 25.03.2015
(73) Proprietor: Structural Research S.L., 22004 Huesca (ES)
(72) Inventor: MONTANER FRAGÜET, Jesús, E-22004 Huesca (ES)
(74) Representative: Schäfer, Matthias W.
(86) International application number: PCT/ES2013/070316
(87) International publication number: WO 2013/171359

(56) References cited:
- WO-A1-00/45010
- WO-A1-2011/082710
- WO-A2-2011/032559
- CN-A- 101 590 982
- FR-A- 1 062 850
- FR-A- 1 119 282
- FR-A- 1 203 098
- FR-A1- 2 091 878
- JP-A- H06 336 823
- NL-C2- 1 032 591
- US-A- 3 938 670
- US-A- 3 938 670
- US-A- 4 498 556
- US-A- 5 327 690
- US-A1- 2010 101 086
- US-A1- 2011 067 353
- US-B1- 6 226 955

## Description

The present description relates, as its title indicates, to a self-climbing telescopic crane and a method for mounting pre-fabricated concrete towers of the type formed by a plurality of modules joined laterally to form diverse frustroconical segments that are subsequently stacked to form the tower, that comprises an external vertical column and an internal column that can move vertically via one or several actuators. The top part of the internal vertical column terminates in a horizontally rotatable capstan, associated with a horizontal arm terminating at the opposite end in a pulley through which the hoist cable moves.

### Background of the invention

Currently various types of modular pre-fabricated concrete towers are known, mainly of the type used as a support for very tall wind turbines and other uses, which typically employ pre-fabricated reinforced concrete elements of a reduced thickness, in some cases reinforced with an internal structure of horizontal and vertical ribs, the elements in some towers being tensioned, both horizontally and vertically, by means of flexible metal cables.

References to several examples of these embodiments can be found, such as for example Patents ES 1058539 *"Perfected structure of modular tower for wind turbines and other applications",* ES 2246734 *"Pre-fabricated modular tower",* ES 2296531 *"Tower for wind turbines mounted with pre-fabricated elements"* and ES 2234392 *"Process for mounting a wind turbine tower and tower thus constructed"*. All of them share a similar, known and commonly used procedure that is described in Patent ES 232610 *"Structure and mounting procedure of concrete towers for wind turbines",* in which the pre-fabricated concrete elements that form each section or segment of the tower are temporarily held in place by using variable length props positioned in an inclined way between the top part of the pre-fabricated concrete elements and the foundation.

This conventional technique causes considerable problems given that the inclined props take up a large proportion of the interior working space, preventing the use of work platforms or similar devices inside, which makes it enormously difficult and, in some cases, prevents the work of the operators inside the tower that is necessary for horizontal cable tensioning operations, sealing of joints and coupling between section segments and between the sections, obliging them to work using platforms or harnesses suspended from cables supported by cranes from the outside. In addition to causing delays in work, this situation entails a considerable occupational hazard for operators.

Other solutions have been sought, such as, for example, that described in Patent ES 201230433/8 *"Mounting structure for pre-fabricated concrete towers",* which presents an internal structure formed by a vertical column fitted, on its top part, with a plurality of telescopic horizontal bracing members, and which also has a work platform for the operators, that moves vertically on the vertical column, all of the elements that form the structure being located inside the section of the tower in the process of being mounted, allowing the work pieces to be mechanically supported at the same time as the operators carry out manual work inside. This embodiment resolves some of the problems encountered in the previous ones, but it still has the considerable drawback of requiring the use of long-reach cranes to lift and position the modular concrete elements, entailing a high economic cost due to their large dimensions and the power required. In addition, lifting and positioning the elements requires considerable accuracy and is quite sensitive to the wind, which is of particular importance in locations of towers for wind turbines, which are selected for being sites where the wind has a great impact, resulting in very few useful days for mounting, considerably prolonging the time needed to mount the towers.

### Description of the invention

To resolve the current problems that exist in mounting pre-fabricated concrete towers of the type formed by a plurality of modules that are joined laterally to form various frustoconical segments that are subsequently stacked to form the tower, the combination of the self-climbing, telescopic crane and telescopic horizontal bracing members according to the independent claim 1 and method for mounting a pre-fabricated concrete tower according to the independent claim 5 have been devised, whereby the self-climbing, telescopic crane comprises an external vertical column and an internal vertical column that can move vertically via one or several actuators. The top part of the internal vertical column terminates in a horizontally rotatable capstan, associated with a horizontal arm terminating at the opposite end in a pulley through which the hoist cable moves.

The horizontal arm associated with the capstan may be of the telescopic or variable inclination type, in both cases enabling the effective length of the arm to be altered.

In all or in some of the mounting phases, the optional use of an auxiliary work platform is envisaged, moving vertically and horizontally inside the tower, allowing the operators to perform the internal tasks of coupling, concreting, tensioning cables and sealing between the pre-fabricated concrete elements.

This telescopic, self-bearing crane enables its use inside the tower that is to be mounted, by means of a typical work method, in which the pre-fabricated concrete elements that form each section are hoisted, guided by one or several guide rails installed on the outside of some of the pre-fabricated concrete elements, via one or several skids or rollers, which, hereafter shall be referred to as rollers.

Furthermore, operators can descend the outside of the tower to carry out tasks of sealing and finishing the outside as well as, if necessary, to dismantle both the guide rails and the rollers once they have been used.

### Advantages of the invention

The self-climbing telescopic crane and method for mounting pre-fabricated concrete towers that is presented affords numerous advantages over the systems currently available, the most outstanding being that because it is telescopic and self-bearing, it allows the tower to be mounted from the inside of the same, dispensing with the need for expensive, long-reach cranes to be operating for long periods.

Another important advantage is that, thanks to the low cost of the crane and the fact that long-reach cranes are not required, a significant reduction is achieved in the cost of mounting the tower.

Another advantage of this invention is that, as it is supported inside the tower and on the tower itself, sheltered from the wind, and because the elevating of the parts is guided by one or several guide rails, mounting of the tower can be carried out in wind conditions in which it is not possible with conventional mounting methods.

Another of the most important advantages to be highlighted is that given its telescopic and self-climbing nature, it is the very crane that elevates itself between the different tower sections, being able to mount a tower of any height with a two-segment crane that is just slightly higher than one section when stowed.

A further added advantage is that thanks to its reduced size it is easily transportable and reusable for mounting other towers.

It is important to underline that using it for mounting dispenses with the need for large external cranes, with the consequent economic savings on tower mounting.

Along the same lines, the use of an auxiliary crane structure that is transportable and reusable, to be set up beside the tower, has been envisaged, to be optionally used in the dismantling of the telescopic, self-climbing crane, allowing it to be reused in the elevation of another or other towers.

This invention allows greater speed in mounting, enabling the elevation of one section per day, even in windy conditions.

### Description of the figures

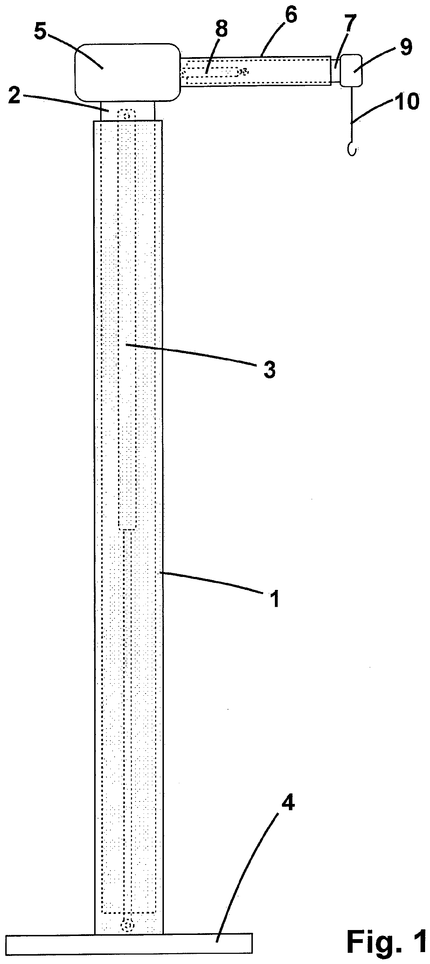

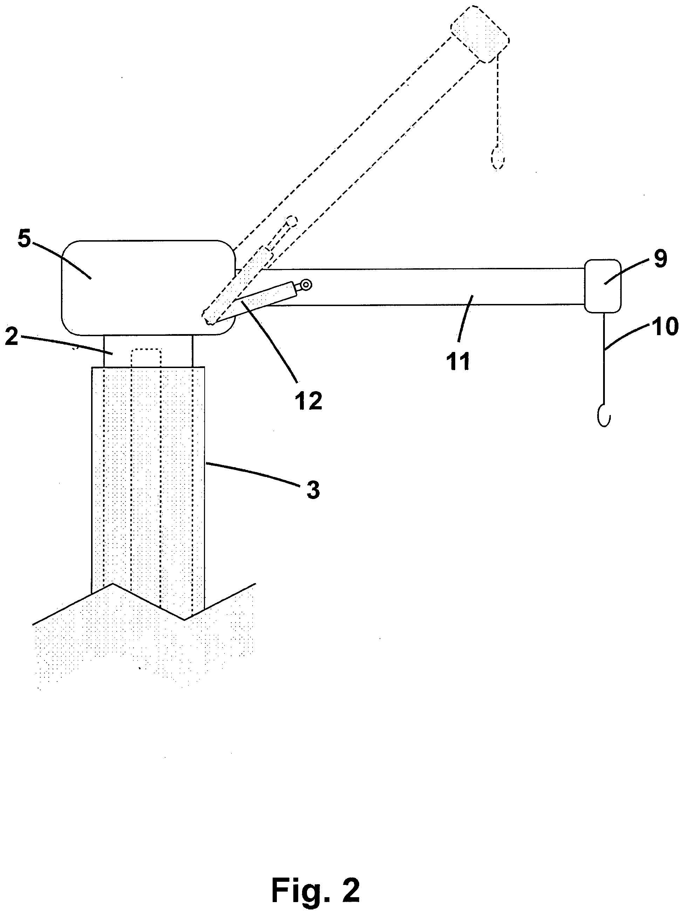

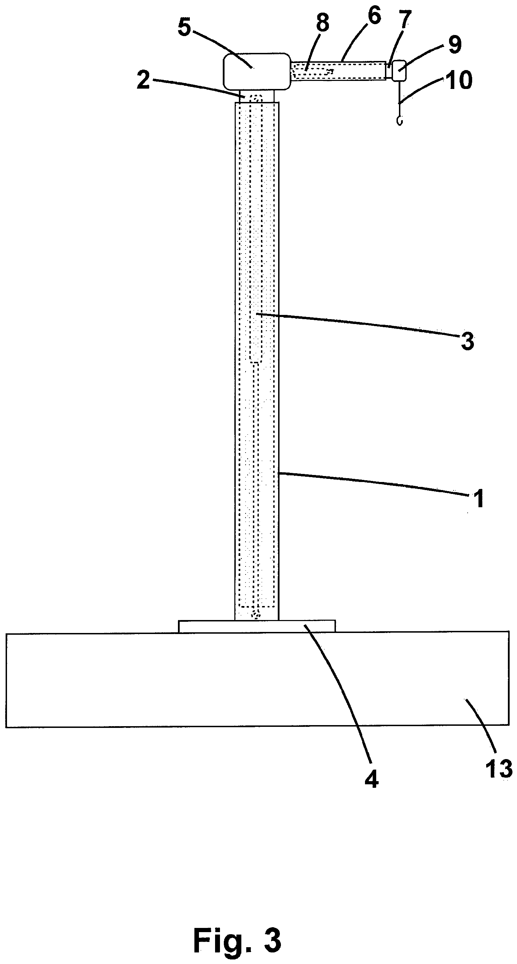

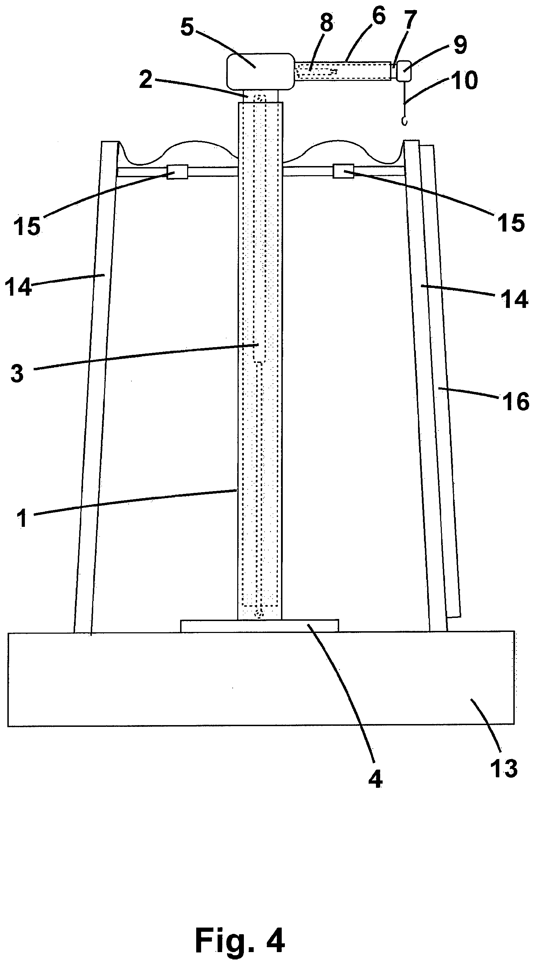

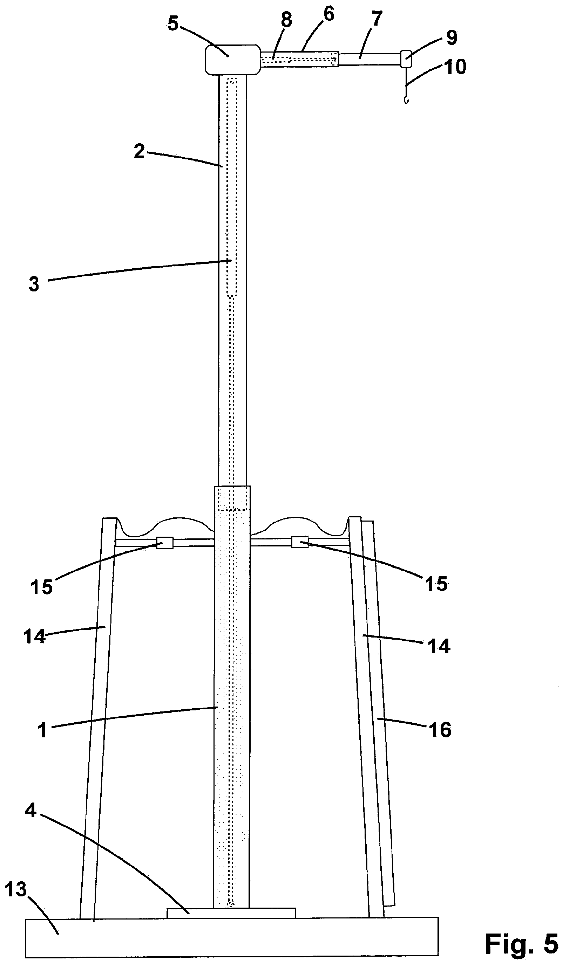

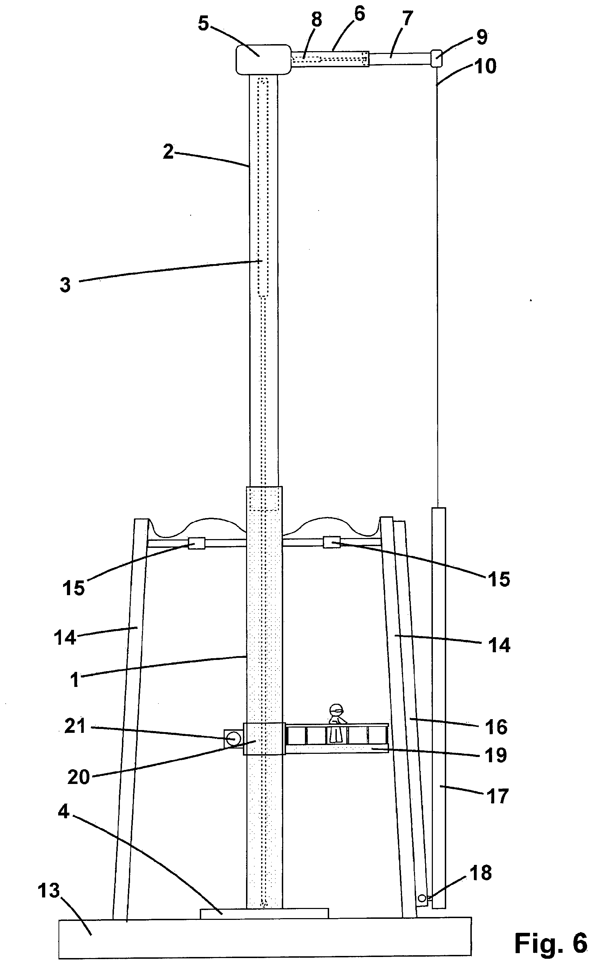

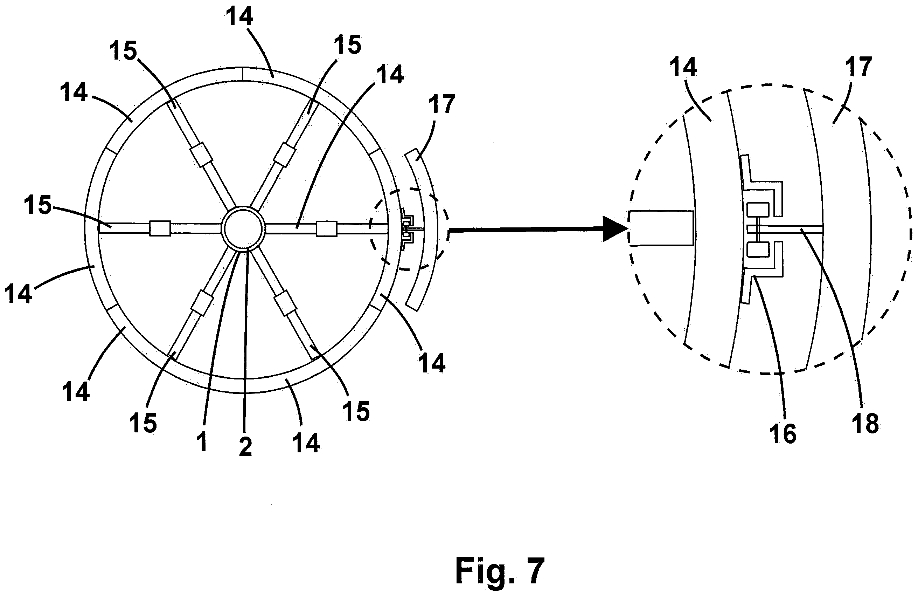

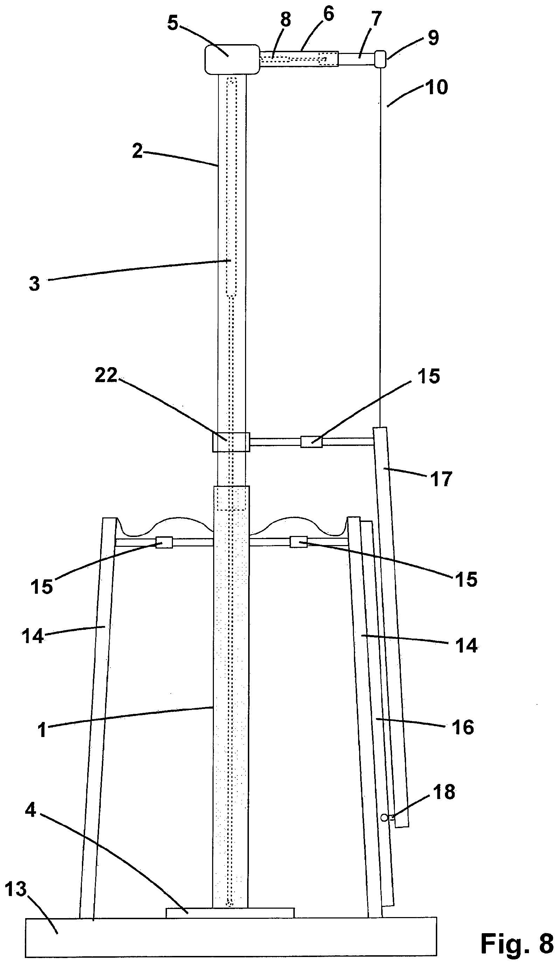

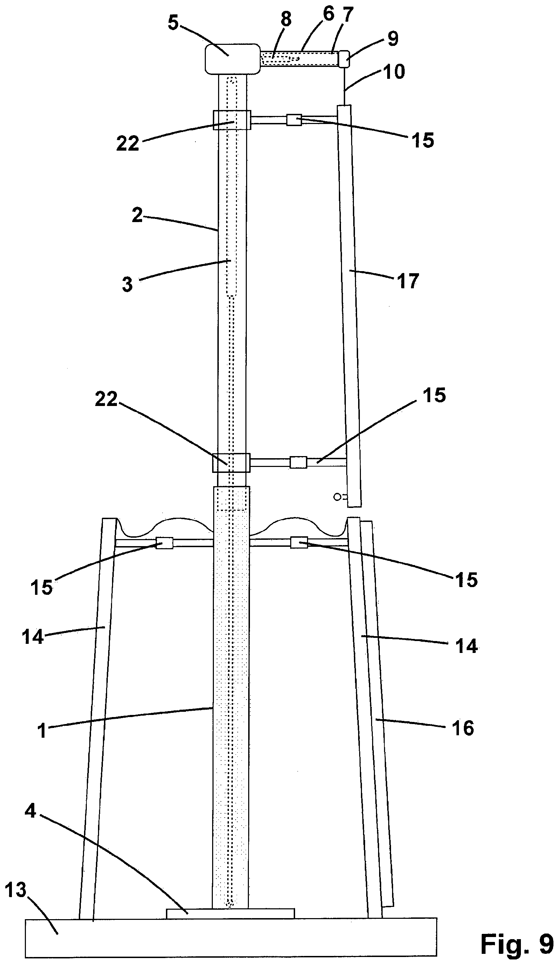

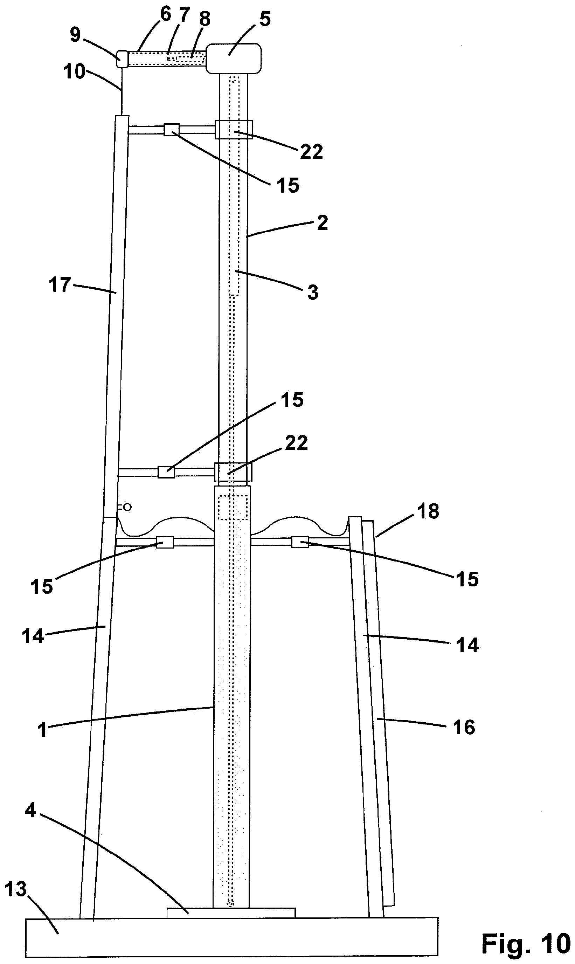

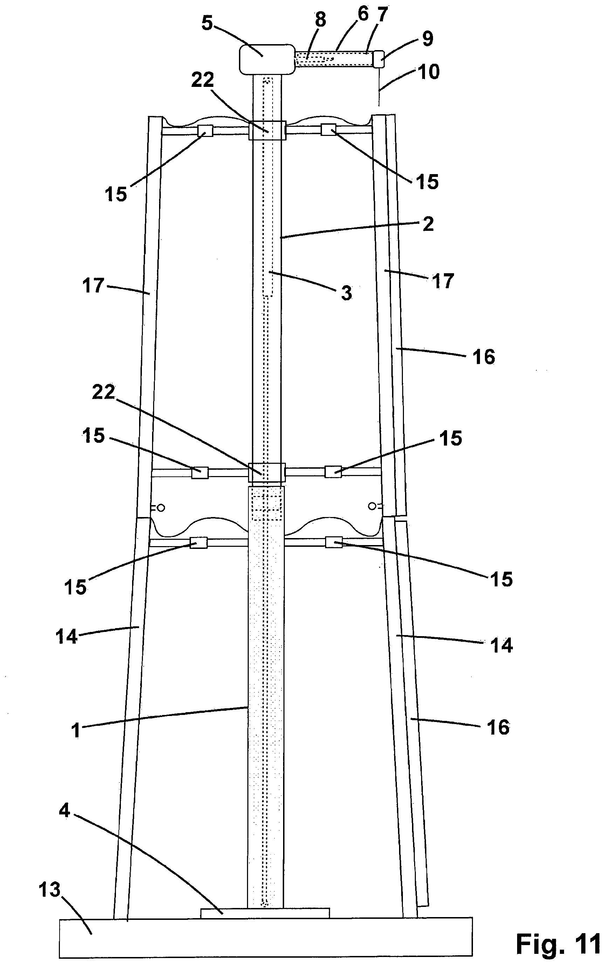

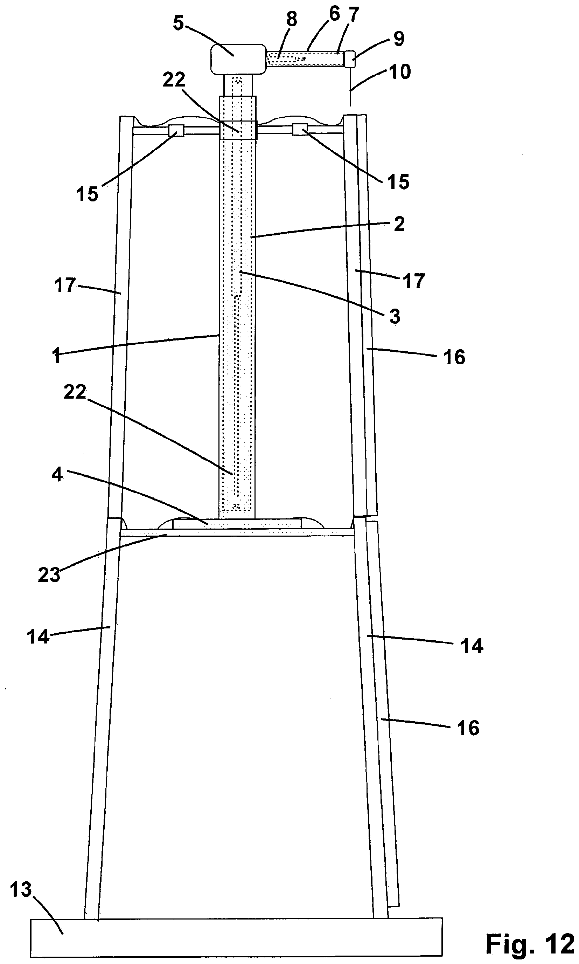

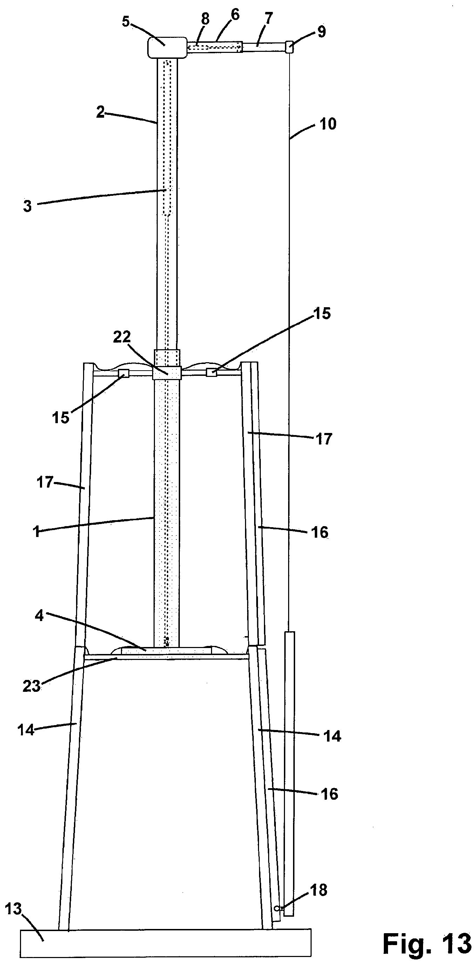

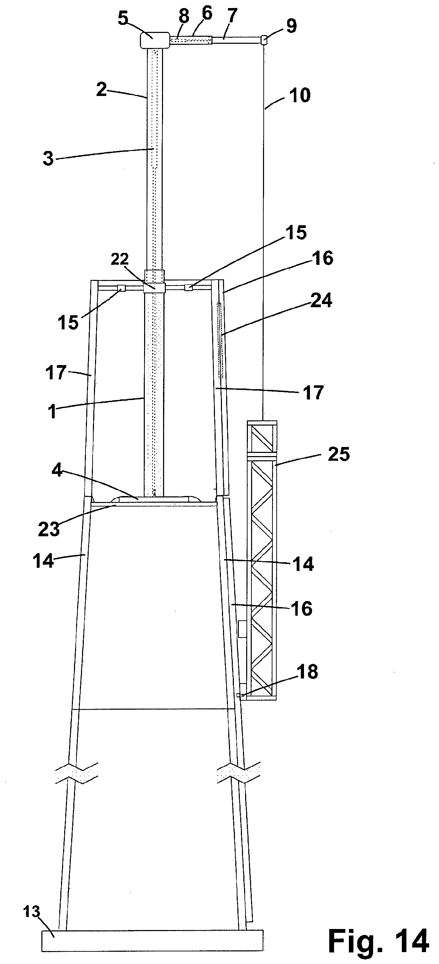

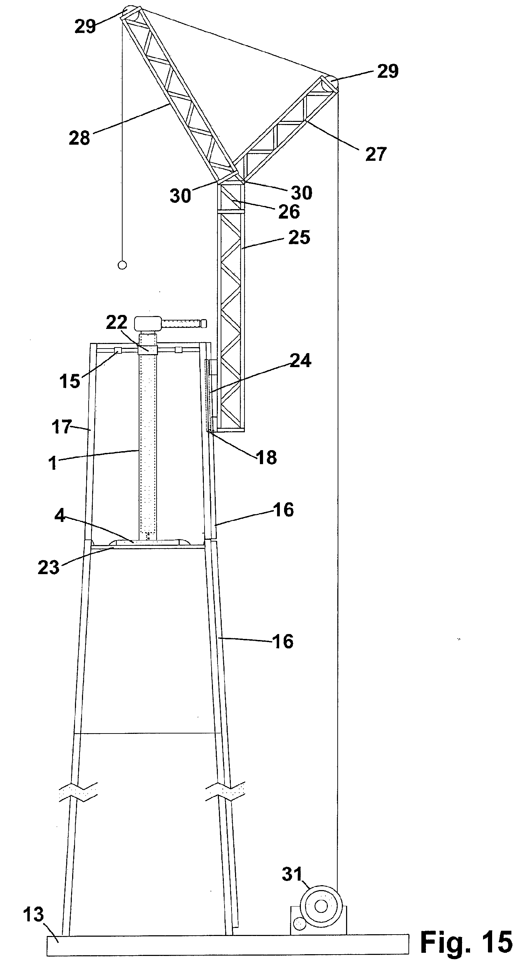

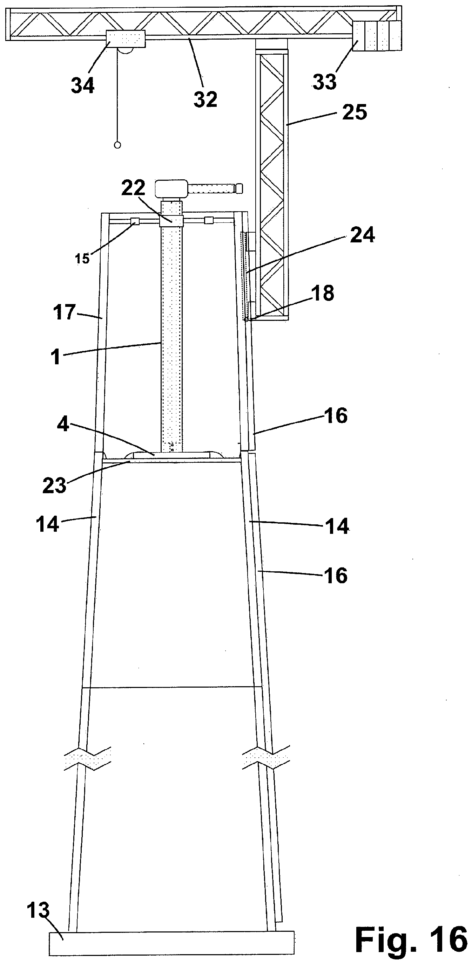

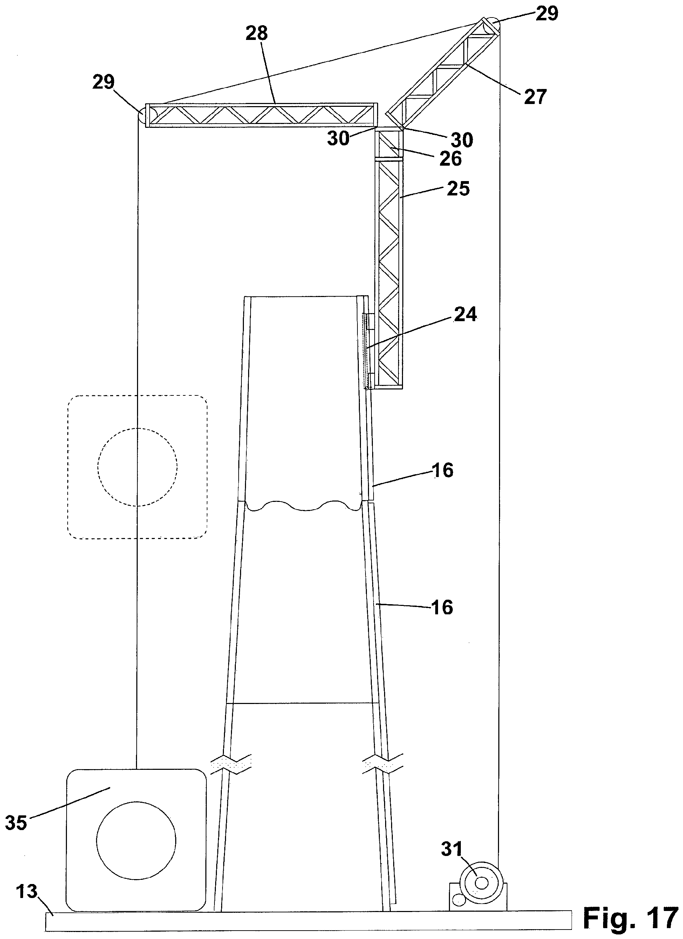

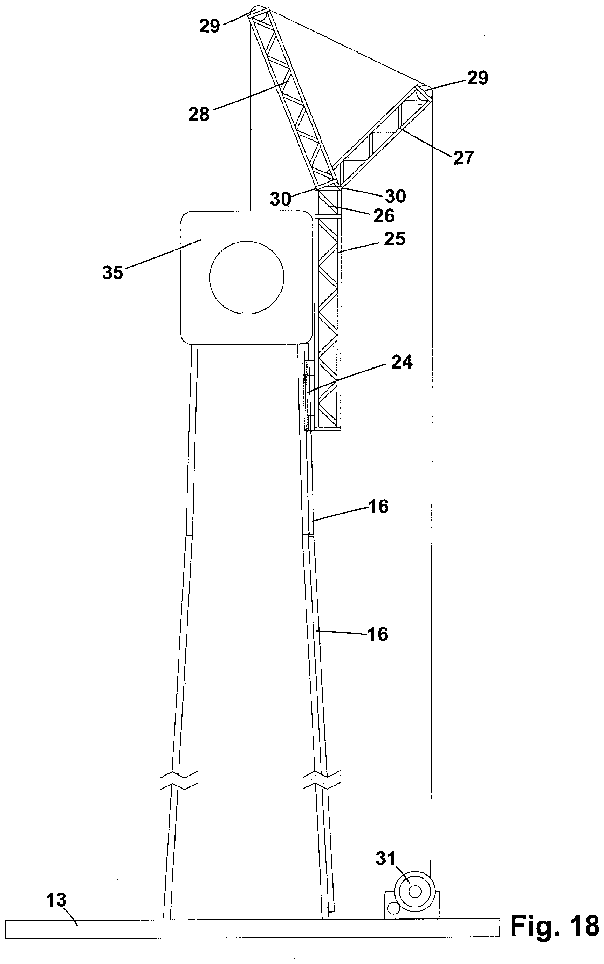

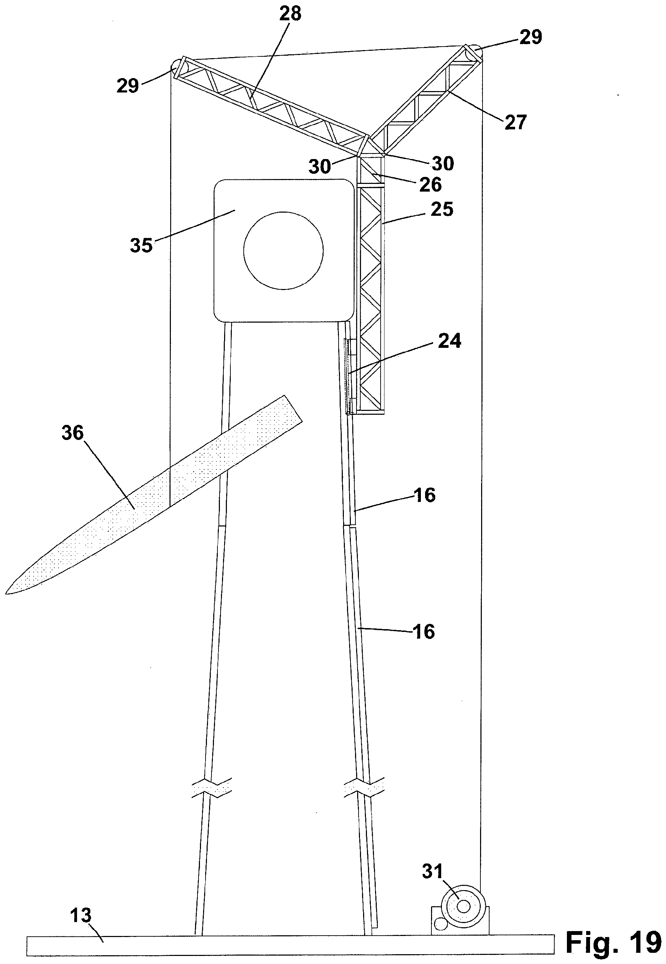

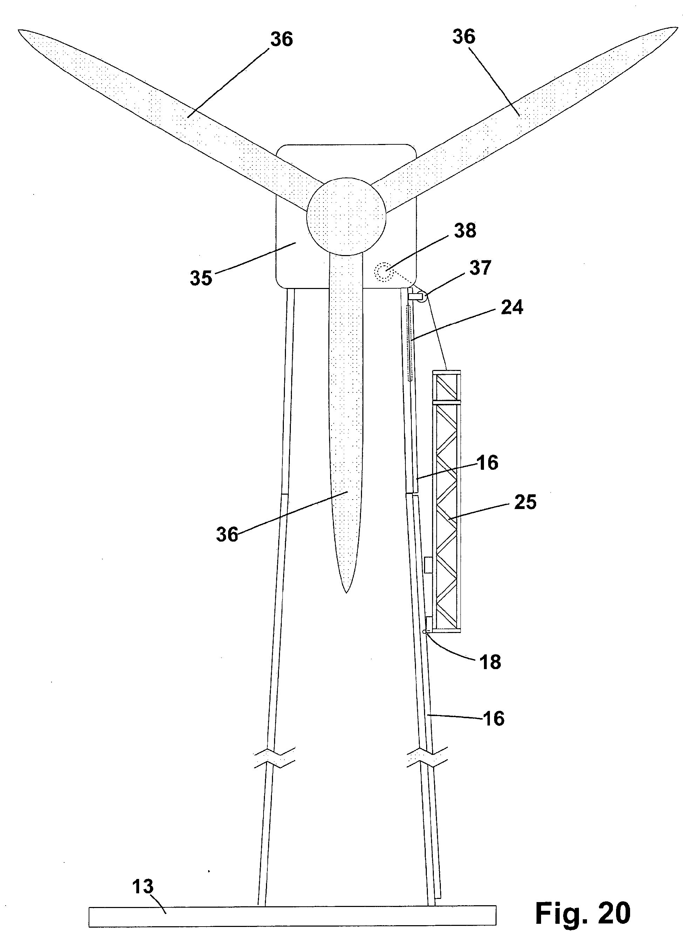

To gain a better understanding of the object of this invention, the attached drawing shows a preferred practical embodiment of a self-climbing telescopic crane and method for mounting pre-fabricated concrete towers.
In said drawing, figure -1- shows a side view of the crane, in its preferred embodiment with the horizontal telescopic arm.
Figure -2- shows a side view of the top part of the crane, in its alternative embodiment with the inclinable horizontal arm.
Figure -3- shows a side view of the first phase of mounting the crane, in its preferred embodiment with the horizontal telescopic arm.
Figure -4- shows a side view of the second phase of mounting the first section of the tower, in its preferred embodiment with the horizontal telescopic arm.
Figure -5- shows a side view of the third phase of elevation of the crane, in its preferred embodiment with the horizontal telescopic arm.
Figure -6- shows a side view of the fourth phase of mounting the following section of the tower, in the second step, in its preferred embodiment with the telescopic horizontal arm.
Figure -7- shows a plan view of the fourth phase of mounting the following section of the tower, in the second step, with an enlarged detail of guiding between a roller and a guide rail
Figure -8- shows a side view of the fourth phase of mounting the following section of the tower, in the third step, in its preferred embodiment with the telescopic horizontal arm.
Figure -9- shows a side view of the fourth phase of mounting the following section of the tower, in the fifth step, in its preferred embodiment with the telescopic horizontal arm.
Figure -10- shows a side view of the fourth phase of mounting the following section of the tower, in the seventh step, in its preferred embodiment with the telescopic horizontal arm.
Figure -11- shows a side view upon completion of the fourth phase of mounting the following section of the tower, in its preferred embodiment with the telescopic horizontal arm.
Figure -12- shows a side view of the fifth phase of hoisting the crane, in the first step, in its preferred embodiment with the horizontal telescopic arm.
Figure -13- shows a side view of the fifth phase of hoisting the crane already completed, in its preferred embodiment with the horizontal telescopic arm.
Figure -14- shows a side view of the sixth phase of dismantling the crane, showing the stage of elevating the auxiliary crane structure.
Figure -15- shows a side view of the sixth phase of dismantling the crane, showing the auxiliary crane structure already mounted on the side of the tower, in the dual-arm embodiment, with the arms deployed.
Figure -16- shows a side view of the sixth phase of dismantling the crane, showing the auxiliary crane structure already mounted on the side of the tower, in the horizontal arm embodiment.
Figure -17- shows a side view of the sixth phase of dismantling the crane, showing the auxiliary crane structure already mounted on the side of the tower and with the self-climbing telescopic crane already dismantled and removed, at the stage of elevating the nacelle.
Figure -18- shows a side view of the sixth phase of dismantling the crane, showing the auxiliary crane structure already mounted on the side of the tower and with the self-climbing telescopic crane already dismantled and removed, with the nacelle already mounted on the tower.
Figure -19- shows a side view of the sixth phase of dismantling the crane, showing the auxiliary crane structure already mounted on the side of the tower and with the self-climbing telescopic crane already dismantled and removed, at the stage of elevating the blades.
Figure - 20- shows a side view of the sixth phase of dismantling the crane, showing the auxiliary crane structure already mounted on the side of the tower and with the self-climbing telescopic crane already dismantled and removed, at the stage of elevating the blades.

### Preferred embodiment of the invention

The self-climbing, telescopic crane for mounting pre-fabricated concrete towers that is the object of this invention, basically comprises, as can be seen in the attached drawing, an external vertical column (1), terminated at the bottom in a support (4), and an internal vertical column (2) that can move vertically via one or several actuators (3). The top part of the internal vertical column (2) terminates in a horizontally rotatable capstan (5) associated with a horizontal arm, terminating at the opposite end in a pulley (9) through which the hoist cable (10) moves.

The horizontal arm associated with the capstan (5) preferably consists of an external tube (6) joined to the capstan (5) and an internal tube (7) with the pulley (9) at one end, said internal tube (7) moving horizontally in a telescopic manner in relation to the external tube (6) via one or several actuators (8). An alternative embodiment is envisaged in which the horizontal arm associated with the capstan (5) is formed by a tube (11) with the pulley (9) at one end, the inclination of the tube (11) being varied in relation to the capstan (5) via a rotation means, together with one or several actuators (12) thereby enabling the effective length of the arm to be varied.

The height of the external vertical column (1) and the internal vertical column (2) shall be preferably slightly higher than the height of one section of the tower to be mounted.

In all or in some of the mounting phases, it is envisaged the optional use of a work platform (19), that moves vertically and horizontally, associated with the external vertical column (1) via a collar (20) and mechanical elevating means (21), that allow the operators to perform the internal tasks of coupling, concreting, tensioning cables and sealing between the pre-fabricated concrete elements.

This self-climbing telescopic crane involves a specific method of mounting a pre-fabricated concrete tower that comprises the following phases.
- a first phase of mounting the crane,
- a second phases of mounting the first section of the tower,
- a third phase of elevating the crane,
- a fourth phase of mounting the following section of the tower and
- a fifth phase of hoisting the crane,
- the third and fourth phases being repeated for each of the tower sections,
- and finishing with a sixth phase of dismantling the crane.

The first phase of mounting the crane involves attaching the support (4) of the external vertical column (1) to the concrete footing (13) and subsequently assembling the rest of the elements that form the crane, in the minimum height position with the internal vertical column (2) fully inserted inside the external vertical column (1), with the aid of another small, conventional external crane.

The second phase of mounting the first section of the tower comprises the adjacent stacking of the pre-fabricated concrete elements (14) supported at their top part by telescopic horizontal bracing members (15) on the top part of the external vertical column (1) in such a way that they form the tower section around the crane, with the crane remaining inside, at least one of the pre-fabricated concrete elements (14) having one or several guide rails (16) arranged vertically on its outer wall.

The third phase of elevation of the crane comprises the telescopic extension of the internal vertical column (2) inside the external vertical column (1) by the effect of the actuators (3), until its maximum height is reached.

The fourth phase of mounting the next section of the tower comprises:
- in a first step, the extending of the horizontal arm associated with the capstan (5) to its maximum extension,
- in a second step, the partial elevation of a pre-fabricated concrete element (17), guided at its bottom part, by one or several rollers (18) arranged on the inner bottom part and which slide along the guide rail or guide rails (16),
- in a third optional step, the support of the top part of the pre-fabricated concrete element (17) on the internal vertical column (2) by means of a bracing member (15) and a sliding collar (22),
- in a fourth step, the complete elevation of the pre-fabricated concrete element (17) over the pre-fabricated concrete element (14) of the bottom section, with the roller (18) exiting the guide rail or guide rails (16),
- in a fifth step of supporting the bottom part of the pre-fabricated concrete element (17) on the internal vertical column (2) by means of a bracing member (15) and a sliding collar (22),
- in a sixth step of rotating the pre-fabricated concrete element (17) by the rotation of the capstan (5) and of the horizontal arm until the pre-fabricated concrete element (17) is placed in its position,
- in a seventh step of the descent of the pre-fabricated concrete element (17) until it rests on the pre-fabricated concrete element (14) of the bottom section,
the above steps being repeated until the section is completed, with at least one of the pre-fabricated concrete elements (17) having one or several guide rails (16) vertically arranged on its outer wall.

The fifth phase of lifting the crane comprises a first step of removing the bracing members (15) and collar (22) located on the top part of the pre-fabricated concrete element (14) of the bottom section, and on the bottom part of the pre-fabricated concrete element (17) of the top section, as well as releasing the support (4) of the footing (13), a second step of the elevation of the external vertical column (1) via the actuators (3), keeping the internal vertical column (2) fixed at its top part by means of the rest of the bracing members (15) until the support (4) is at the height of the top part of the first section, a third step of placing a platform (23) at the top part of the lower segment of the tower and a fourth step of attaching the support (4) to the platform (23).

The sixth phase of dismantling the crane comprises a stage of mounting an auxiliary crane structure (25) that temporarily uses the previously mounted tower as the crane tower, with a rotatable top part (26), on the outside of the last top segment of the tower, followed by a stage of releasing the support (4) of the footing (13), removing the bracing members (15) and remaining collars (22) and extracting the rest of the crane elements and platform (23) from the last segment of the tower via the auxiliary crane structure (25), followed by a stage of hoisting and mounting the nacelle (35) and the blades (36) by means of said auxiliary crane structure (25), finishing off with a stage of dismantling the auxiliary crane structure (25) and, optionally, the auxiliary elements that may remain such as guide rails (16), support plates (24), return pulley (37), etc...

The stage of mounting the auxiliary crane structure (25) on the outside of the last top segment of the tower comprises a step in which the internal vertical column (2) extends telescopically through the inside of the external vertical column (1) due to the effect of the actuators (3), until it reaches its maximum height, followed by a step of extending the horizontal arm associated with the capstan (5) to its maximum extension. Following this there is a step of elevating the auxiliary crane structure (25), preferably of the lattice type, to reduce its weight, guided on its bottom part by one or several rollers (18), arranged on the inner bottom part and which slide along the guide rail or guide rails (16), followed by a step of attaching the auxiliary crane structure (25) to one or several support plates (24) that are inserted in the outer side of a pre-fabricated concrete element (17) of the top section, maintaining a separation distance with the tower. If a dual-arm crane structure is used, this stage finishes with a step of opening the two arms (26,27) of the auxiliary crane structure (25), previously folded by the rotation means (30) during the ascent, mounting of the dual capstan (31) near to the base of the tower and joined to the concrete footing (13), and laying the cables through the pulleys (29). In the alternative case of using a crane structure with horizontal arm, it finishes with a step of mounting the horizontal arm (32), the counterweights (33) and the movable capstan (34).

The stage of hoisting and mounting the nacelle (35) and the blades (36) comprises a first step of elevating the nacelle (35), preferably in one piece, along the side of the tower
by means of the auxiliary crane structure (25), a second step of positioning over the top part of the tower and attachment to it, a third step of the lateral rotation of the nacelle (35) and of the auxiliary crane structure (25) to facilitate the following steps, followed by a step of elevation, also via the auxiliary crane structure (25), for each of the blades (36) and mounting on the nacelle (35).

Lastly, once all of the wind turbine elements have been mounted, the stage of dismantling the auxiliary crane structure (25) comprises a step of attaching a return pulley (37) at the top part of the tower, next to the auxiliary crane structure (25), a second step of folding the two arms (26,27) or the horizontal arm (32), a third step of attachment by means of a cable between the auxiliary crane structure (25) and the auxiliary capstan (38) that is in the nacelle (35), or the dual capstan (31), a fourth step of releasing the auxiliary crane structure (25) from the support plate or support plates (24) and concluding with a fifth step of the descent of the auxiliary crane structure (25), guided on its bottom part by one or several rollers (18) arranged on the inner bottom part and which slide along the guide rail or guide rails (16), to the ground.

Alternatively, the sixth phase of dismantling the crane may consist solely of releasing the support (4) from the footing (13), removing the bracing members (15) and the remaining collars (22), and removing the rest of the crane elements and the platform (23) from the last segment of the tower using a conventional external crane, then placing them on the ground.

## Claims

1. Combination of a self-climbing, telescopic crane and telescopic horizontal bracing members for mounting pre-fabricated concrete towers of the type formed by a plurality of modules joined laterally to form diverse frustroconical segments that are subsequently stacked to form the tower **characterized in that** the self-climbing, telescopic crane comprises an external vertical column (1), terminated at the bottom in a support (4), and an internal vertical column (2) that can move vertically via one or several actuators (3), wherein the top part of said internal vertical column (2) terminates in a horizontally rotatable capstan (5) associated with a horizontal arm, terminating at the opposite end in a pulley (9) through which the hoist cable (10) moves and wherein the telescopic horizontal bracing members (15) may be provided on the top part of the external vertical column (1) in such a way that they allow to support pre-fabricated concrete elements (14) forming the tower section around the crane and the crane remaining inside.

2. Combination of the self-climbing telescopic crane and telescopic horizontal bracing members for mounting pre-fabricated concrete towers, according to claim 1, wherein the horizontal arm associated with the capstan (5) is formed by an external tube (6) joined to the capstan (5) and an internal tube (7) with the pulley (9) at one end, said internal tube (7) being able to move horizontally in relation to the external tube (6) via one or several actuators (8).

3. Combination of the self-climbing, telescopic crane and telescopic horizontal bracing members for mounting pre-fabricated concrete towers, according to claim 1, wherein the horizontal arm associated with the capstan (5) is formed by a tube (11) with the pulley (9) at one end, the inclination of the tube (11) being variable, via a rotation means, in relation to the capstan (5) together with one or several actuators (12).

4. Combination of the self-climbing telescopic crane and telescopic horizontal bracing members for mounting pre-fabricated concrete towers, according to claim 1, wherein it includes a work platform (19) that moves vertically and horizontally, associated with the external vertical column (1) via a collar (20) and mechanical elevating means (21).

5. Method for mounting a pre-fabricated concrete tower by means of the combination of the self-climbing telescopic crane and telescopic horizontal bracing members according to any of the preceding claims, **characterized in that** it comprises a first phase of mounting the crane, a second phase of mounting the first section of the tower, a third phase of elevating the crane, a fourth phase of mounting the following section of the tower, a fifth phase of lifting the crane, the third and fourth phases being repeated for each of the tower sections, and finishing with a sixth phase of dismantling the crane, wherein the fourth phase of mounting the following section of the tower comprises, in a first step, the extending of the horizontal arm associated with the capstan (5) to its maximum extension, in a second step, the partial elevation of a pre-fabricated concrete element (17) guided at its bottom part by one or several rollers (18) arranged on the inner bottom part and which slide along a guide rail or guide rails (16) arranged vertically on the outer wall of at least one of the pre-fabricated concrete elements (14) of the bottom section, in a third optional step of supporting the top part of the
pre-fabricated concrete element (17) on the internal vertical column (2) by means of a bracing member (15) and a sliding collar (22), in a fourth step of fully elevating the pre-fabricated concrete element (17) over the pre-fabricated concrete element (14) of the bottom section, the roller (18) exiting the guide rail or guide rails (16), in a fifth step of supporting the bottom part of the pre-fabricated concrete element (17) on the internal vertical column (2) by means of a bracing member (15) and a sliding collar (22), in a sixth step of rotating the pre-fabricated concrete element (17) by the rotation of the capstan (5) and of the horizontal arm until the pre-fabricated concrete element (17) is placed in its position, in a seventh step of the descent of the pre-fabricated concrete element (17) until it rests on the pre-fabricated concrete element (14) of the bottom section, the previous steps being repeated until the section is completed, also at least one of the pre-fabricated concrete elements (17) having one or several guide rails (16) vertically arranged on its outer wall.

6. Method for mounting a pre-fabricated concrete tower, according to claim 5, wherein the first phase of mounting the crane entails attaching the support (4) of the external vertical column (1) to the concrete footing (13) and subsequently assembling the rest of the elements that form the crane, in the minimum height position with the internal vertical column (2) fully inserted inside the external vertical column (1), with the aid of another small, conventional external crane.

7. Method for mounting a pre-fabricated concrete tower, according to claim 5, wherein the second phase of mounting the first section of the tower comprises the adjacent stacking of the pre-fabricated concrete elements (14) supported at their top part by telescopic horizontal bracing members (15) on the top part of the external vertical column (1) in such a way that they form the tower section around the crane and the crane remains inside.

8. Method for mounting a pre-fabricated concrete tower, according to claim 5, wherein the third phase of elevation of the crane comprises the telescopic extending of the internal vertical column (2) inside the external vertical column (1) by the effect of the actuators (3), until its maximum height is reached.

9. Method for mounting a pre-fabricated concrete tower, according to claim 5, wherein the fifth phase of lifting the crane comprises a first step of removing the bracing members (15) and collar (22) located on the top part of the pre-fabricated concrete element (14) of the lower section, and on the bottom part of the pre-fabricated concrete element (17) of the upper section, as well as releasing the support (4) of the footing (13), a second step of elevating the external vertical column (1) via the actuators (3), keeping the internal vertical column (2) fixed at its top part by means of the rest of the bracing members (15) until the support (4) is at the height of the top part of the first section, a third step of placing a platform (23) at the top part of the lower segment of the tower and a fourth step of attaching the support (4) to the platform (23).

10. Method for mounting a pre-fabricated concrete tower, according to claim 5, wherein the sixth phase of dismantling the crane entails releasing the support (4) from the footing (13), removing the bracing members (15) and the remaining collars (22), and removing the rest of the crane elements and the platform (23) from the last segment of the tower using a conventional external crane and then placing them on the ground.

11. Method for mounting a pre-fabricated concrete tower, according to claim 5, wherein the sixth phase of dismantling the crane comprises a stage of mounting an auxiliary crane structure (25) with a rotatable top part (26), on the outside of the last upper segment of the tower, followed by a stage of releasing the support (4) of the footing (13), removing the bracing members (15) and remaining collars (22) and removing the rest of the crane elements and platform (23) from the last segment of the tower via the auxiliary crane structure (25), followed by a stage of hoisting and mounting the nacelle (35) and the blades (36) by means of said auxiliary crane structure (25), finishing off with a stage of dismantling the auxiliary crane structure (25).

12. Method for mounting a pre-fabricated concrete tower, according to claim 11, wherein the stage of mounting an auxiliary crane structure (25) on the outside of the last upper segment of the tower comprises a step of the telescopic extending of the internal vertical column (2) inside the external vertical column (1) by the effect of the actuators (3), until its maximum height is reached, followed by a step of extending the horizontal arm associated with the capstan (5) to its maximum extension, continuing with a step of elevating the auxiliary crane structure (25) guided at its bottom part by one or several rollers (18) arranged on the inner bottom part and which slide along the guide rail or guide rails (16), followed by a step of attaching the auxiliary crane structure (25) to one or several support plates (24) that are inserted in the outer side of a pre-fabricated concrete element (17) of the top section, maintaining a separation distance with the tower, finishing, in the case of a dual-arm crane structure, with a step of opening the two arms (26,27) of the auxiliary crane structure (25), previously folded by the rotation means (30), during the ascent, the mounting of the dual capstan (31) near to the base of the tower and joined to the concrete footing (13), and the laying of the cables through the pulleys (29), or, in the case of a crane structure with horizontal arm, with a step of mounting the horizontal arm (32), the counterweights (33) and the movable capstan (34).

13. Method for mounting a pre-fabricated concrete tower, according to claim 11, wherein the stage of hoisting and mounting the nacelle (35) and the blades (36) comprises a first step of elevating the nacelle (35) up the side of the tower, by means of the auxiliary crane structure (25), a second step of positioning at the top part of the tower and attachment to it, a third step of the lateral rotation of the nacelle (35) and of the auxiliary crane structure (25) to facilitate the next steps, followed by a step of elevating, also via the auxiliary crane structure (25), each of the blades (36) and mounting on the nacelle (35).

14. Method for mounting a pre-fabricated concrete tower, according to claim 11, wherein the stage of dismantling the auxiliary crane structure (25) comprises a step of attaching a return pulley (37) at the top part of the tower, next to the auxiliary crane structure (25), a second step of folding the two arms (26,27) or the horizontal arm (32), a third step of attachment by means of a cable between the auxiliary crane structure (25) and the auxiliary capstan (38) in the nacelle (35), or the dual capstan (31), a fourth step of releasing the auxiliary crane structure (25) from the support plate or support plates (24) and concluding with a fifth step of the descent of the auxiliary crane structure (25), guided at its bottom part by one or several rollers (18) arranged on the inner bottom part and which slide along the guide rail or guide rails (16), to the ground.

## Patentansprüche

1. Kombination aus einem selbst-kletternden, teleskopischen Kran und teleskopischen horizontalen Versteifungselementen zum Montieren vorgefertigter Betonmasten von der Bauart, welche aus einer Vielzahl von seitlich verbundenen Modulen gebildet wird, um verschiedene kegelstumpfförmige Segmente zu bilden, welche nacheinander gestapelt werden, um den Mast zu bilden, **dadurch gekennzeichnet, dass** der selbst-kletternde Kran eine äußere, vertikale Säule (1) aufweist, welche an dem unteren Ende in einem Stützkörper (4) endet, und eine innere, vertikale Säule (2) aufweist, welche sich über ein oder mehrere Stellglieder (3) vertikal bewegen kann, wobei der obere Teil der inneren, vertikalen Säule (2) in einer horizontal drehbaren Winde (5) endet, welche mit einem horizontalen Arm verknüpft ist, welcher an dem gegenüber liegenden Ende in einer Rolle (9) endet, über welche das Hebeseil (10) verläuft und wobei die teleskopischen, horizontalen Versteifungselemente (15) auf dem oberen Teil der äußeren, vertikalen Säule (1) auf eine derartige Weise vorgesehen sein können, dass sie es ermöglichen, vorgefertigte Betonelemente (14), welche den Mastabschnitt um den Kran herum bilden, zu tragen, und dass der Kran im Inneren verbleibt.

2. Kombination aus dem selbst-kletternden, teleskopischen Kran und teleskopischen horizontalen Versteifungselementen zum Montieren vorgefertigter Betonmasten nach Anspruch 1, wobei der mit der Winde (5) verknüpfte horizontale Arm von einem mit der Winde (5) verbundenen äußeren Rohr (6) und einem inneren Rohr (7) mit der Rolle (9) an einem Ende gebildet wird, wobei das innere Rohr (7) in der Lage ist, sich horizontal in Bezug auf das äußere Rohr (6) über einen oder mehrere Stellglieder (8) zu bewegen.

3. Kombination aus dem selbst-kletternden, teleskopischen Kran und teleskopischen horizontalen Versteifungselementen zum Montieren vorgefertigter Betonmasten nach Anspruch 1, wobei der mit der Winde (5) verknüpfte horizontale Arm von einem Rohr (11) mit der Rolle (9) an einem Ende gebildet wird, wobei die Neigung des Rohres (11) über ein Drehmittel in Bezug auf die Winde (5) zusammen mit einem oder mehreren Stellgliedern (12) variabel ist.

4. Kombination aus dem selbst-kletternden, teleskopischen Kran und teleskopischen horizontalen Versteifungselementen zum Montieren vorgefertigter Betonmasten nach Anspruch 1, wobei sie eine Arbeitsplattform (19) umfasst, welche sich vertikal und horizontal bewegt und über einen Kragen (20) und mechanische Hebemittel (21) mit der äußeren, vertikalen Säule (1) verknüpft ist.

5. Verfahren zum Montieren eines vorgefertigten Betonmastes mittels der Kombination aus dem selbst-kletternden, teleskopischen Kran und teleskopischen horizontalen Versteifungselementen nach einem der vorhergehenden Ansprüche, **dadurch gekennzeichnet, dass** es aufweist eine erste Phase des Montierens des Krans, eine zweite Phase des Montierens des ersten Abschnitts des Masts, eine dritte Phase des Aufsteigen des Krans, eine vierte Phase des Montierens des folgenden Abschnitts des Masts, eine fünfte Phase des Anhebens des Krans, wobei die dritte und vierte Phase für jeden der Mastabschnitte wiederholt wird und mit einer sechsten Phase des Abbauens des Krans endet, wobei die vierte Phase des Montierens des folgenden Abschnitts des Masts aus einem ersten Schritt, dem Verlängern des mit der Winde (5) verknüpften horizontalen Arms auf seine maximale Verlängerung, aus einem zweiten Schritt, dem teilweise Anheben eines vorgefertigten Betonelements (17), welches an seinem Bodenteil von einer oder mehreren Rollen (18) geführt wird, welche an dem inneren Bodenteil angeordnet sind und welche entlang einer Führungsschiene oder Führungsschienen (16) gleiten, welche vertikal an der äußeren Wand von mindestens einem der vorgefertigten Betonelementen (14) des Bodenabschnitts angeordnet sind, aus einem dritten optionalen Schritt des Abstützens des oberen Teils des vorgefertigten Betonelements (17) an der inneren, vertikalen Säule (2) mittels eines Verstärkungselements (15) und eines gleitenden Kragens (22), aus einem vierten Schritt des vollständigen Anhebens des vorgefertigten Betonelements (17) über das vorgefertigte Betonelement (14) des Bodenabschnitts, wobei die Rolle (18) die Führungsschiene oder Führungsschienen (16) verlässt, aus einem fünften Schritt des Abstützens des Bodenabschnitts des vorgefertigten Betonelements (17) an der inneren, vertikalen Säule (2) mittels eines Verstärkungselements (15) und eines gleitenden Kragens (22), aus einem sechsten Schritt des Drehens des vorgefertigten Betonelements (17) durch die Drehung der Winde (5) und des horizontalen Arms bis das vorgefertigte Betonelement (17) in seiner Position platziert ist, aus einem siebten Schritt des Absenkens des vorgefertigten Betonelements (17) besteht, bis es auf dem vorgefertigten Betonelement (14) des Bodenabschnitts ruht, wobei die vorhergehenden Schritte wiederholt werden, bis der Abschnitt fertig gestellt ist, wobei auch mindestens eines der vorgefertigten Betonelemente (17) eine oder mehrere Führungsschienen (16) aufweist, welche an dessen äußeren Wand angebracht sind.

6. Verfahren zum Montieren eines vorgefertigten Betonmastes nach Anspruch 5, wobei die erste Phase des Montierens des Krans Anbringen des Stützkörpers (4) der äußeren, vertikalen Säule (1) an dem Betonfuß (13) und nachfolgend Zusammenbauen des Restes der Elemente, welche den Kran bilden, in der minimalen Höhenposition nach sich zieht, wobei die innere, vertikale Säule (2) mit der Hilfe eines anderen kleinen herkömmlichen, äußeren Krans vollständig innerhalb der äußeren, vertikalen Säule (1) eingesetzt wird.

7. Verfahren zum Montieren eines vorgefertigten Betonmastes nach Anspruch 5, wobei die zweite Phase des Montierens des ersten Abschnitts des Masts das angrenzende Stapeln der vorgefertigten Betonelemente (14) aufweist, welche an ihrem oberen Teil durch teleskopische, horizontale Versteifungselemente (15) auf dem oberen Teil der äußeren, vertikalen Säule (1) derartig abgestützt werden, dass sie den Mastabschnitt um den Kran herum bilden und der Kran innerhalb verbleibt.

8. Verfahren zum Montieren eines vorgefertigten Betonmastes nach Anspruch 5, wobei die dritte Phase des Erhöhens des Krans das teleskopische Verlängern der inneren, vertikalen Säule (2) innerhalb der äußeren, vertikalen Säule (1) durch Einwirkung der Stellglieder (3) aufweist, bis ihre maximale Höhe erreicht ist.

9. Verfahren zum Montieren eines vorgefertigten Betonmastes nach Anspruch 5, wobei die fünfte Phase des Anhebens des Krans einen ersten Schritt des Entfernens der Versteifungselemente (15) und des Kragens (22), welche sich an dem oberen Teil des vorgefertigten Betonelements (14) des unteren Abschnitts und an dem unteren Teil des vorgefertigten Betonelements (17) des oberen Abschnitts befinden, sowie Lösen des Stützkörpers (4) von dem Fuß (13), einen zweiten Schritt des Erhöhens der äußeren, vertikalen Säule (1) über die Stellglieder (3), was die innere, vertikale Säule (2) an ihrem oberen Teil mittels des Rests der Versteifungselemente (15) befestigt hält, bis der Stützkörper (4) auf der Höhe des oberen Teils des ersten Abschnitts ist, einen dritten Schritt des Platzierens einer Plattform (23) an dem oberen Teil des unteren Segments des Masts und einen fünften Schritt des Anbringens des Stützkörpers (4) an der Plattform (23) aufweist.

10. Verfahren zum Montieren eines vorgefertigten Betonmastes nach Anspruch 5, wobei die sechste Phase des Abbauens des Krans Lösen des Stützkörpers (4) von dem Fuß (13), Entfernen der Versteifungselemente (15) und der verbleibenden Kragen (22) und Entfernen des Restes der Kranelemente und der Plattform (23) von dem letzten Segment des Turms mit einem herkömmlichen, äußeren Kran und dann Platzieren dieser auf dem Boden nach sich zieht.

11. Verfahren zum Montieren eines vorgefertigten Betonmastes nach Anspruch 5, wobei die sechste Phase des Abbauens des Krans eine Stufe des Montierens einer Hilfskranstruktur (25) mit einem drehbaren, oberen Teil (26) an der Außenseite des letzten oberen Segments des Masts aufweist, gefolgt von einer Stufe des Lösens des Stützkörpers (4) von dem Fuß (13), Entfernen der Versteifungselemente (15) und verbleibenden Kragen (22) und Entfernen des Rests der Kranelemente und Plattform (23) von dem letzten Segment des Masts über die Hilfskranstruktur (25), gefolgt von einer Stufe des Anhebens und Montierens der Gondel (35) und der Flügel (36) mittels der Hilfskranstruktur (25) und Abschließen mit einer Stufe des Abbauens der Hilfskranstruktur (25).

12. Verfahren zum Montieren eines vorgefertigten Betonmastes nach Anspruch 11, wobei die Stufe des Montierens einer Hilfskranstruktur (25) an der Außenseite des letzten oberen Segments des Masts einen Schritt des teleskopischen Verlängerns der inneren, vertikalen Säule (2) innerhalb der äußeren, vertikalen Säule (1) durch die Einwirkung der Stellglieder (3) aufweist, bis ihre maximale Höhe erreicht ist, gefolgt von einem Schritt des Verlängerns des mit der Winde (5) verknüpften horizontalen Arms auf seine maximale Verlängerung, und fortfahren mit einem Schritt des Erhöhens der Hilfskranstruktur (25), welche an ihrem Bodenteil durch eine oder mehrere Rollen (18) geführt wird, welche an dem inneren Bodenteil angeordnet sind und welche entlang der Führungsschiene oder Führungsschienen (16) gleiten, gefolgt von einem Schritt des Anbringens der Hilfskranstruktur (25) an einer oder mehreren Stützplatten (24), welche in der äußeren Seite eines vorgefertigten Betonelements (17) des oberen Abschnitts eingesetzt sind, Beibehalten eines Trennabstandes mit dem Mast, Beenden in dem Fall einer Doppelarm-Kranstruktur, mit einem Schritt des Öffnens der beiden Arme (26, 27) der Hilfskranstruktur (25), welche zuvor durch die Drehmittel (30) gefaltet wurden, während des Aufsteigens, das Montieren der doppelten Winde (31), welche nahe der Basis des Masts liegt und mit dem Betonfuß (13) verbunden ist, und das Legen der Seile auf die Rollen oder im Fall einer Kranstruktur mit horizontalem Arm mit dem Schritt des Montierens des horizontalen Arms (32), der Gegengewichte (33) und der beweglichen Winde (34).

13. Verfahren zum Montieren eines vorgefertigten Betonmastes nach Anspruch 11, wobei die Stufe des Anhebens und Montierens der Gondel (35) und der Flügel (36) einen ersten Schritt des Erhöhens der Gondel (35) an der Seite des Masts mittels der Hilfskranstruktur (25), einen zweiten Schritt des Positionierens an dem oberen Teil des Masts und der Befestigung daran, einen dritten Schritt des seitlichen Drehens der Gondel (35) und der Hilfskranstruktur (25), um die nächsten Schritte zu erleichtern, aufweist, gefolgt von dem Schritt des Anhebens auch über die Hilfskranstruktur (25) von jedem der Flügel (36) und Montieren an der Gondel (35).

14. Verfahren zum Montieren eines vorgefertigten Betonmastes nach Anspruch 11, wobei die Stufe des Abbauens der Hilfskranstruktur (25) einen Schritt des Anbringens einer Umlenkrolle (37) an dem oberen Teil des Masts, danach an der Hilfskranstruktur (25), einen zweiten Schritt des Faltens der beiden Arme (26, 27) oder des horizontalen Arms (32), einen dritten Schritt des Anbringens mittels eines Kabels zwischen der Hilfskranstruktur (25) und der Hilfswinde (38) in der Gondel (35) oder der Doppelwinde (31), einen vierten Schritt des Lösens der Hilfskranstruktur (25) von der Stützplatte oder den Stützplatten (24) aufweist und mit einem fünften Schritt des Absenkens der Hilfskranstruktur (25), welche an ihrem Bodenteil durch eine oder mehrere Rollen (18) geführt wird, welche an dem inneren Bodenteil angeordnet sind und welche entlang der Führungsschiene oder Führungsschienen (16) zum Boden gleiten, abschließt.

## Revendications

1. Combinaison d'une grue télescopique auto-grimpante et d'éléments horizontaux télescopiques de renforcement pour le montage de mâts préfabriqués en béton du type de ceux formés par une pluralité de modules rattachés latéralement de sorte à former divers segments tronconiques qui sont ensuite empilés pour former le mât **caractérisée en ce que** la grue télescopique auto-grimpante comprend une colonne verticale externe (1) qui se termine en bas par un support (4), et une colonne verticale interne (2) qui peut se déplacer verticalement grâce à un ou plusieurs actionneurs (3), étant précisé que la partie supérieure de ladite colonne verticale interne (2) se termine par un cabestan pivotant horizontalement (5) associé à un bras horizontal dont le côté opposé se termine par une poulie (9) à travers laquelle le câble du treuil (10) se déplace, et étant précisé que les éléments horizontaux télescopiques de renforcement (15) peuvent être disposés sur le sommet de la colonne verticale externe (1) de sorte qu'ils permettent de supporter des éléments préfabriqués en béton (14) formant la section du mât autour de la grue, la grue restant à l'intérieur.

2. Combinaison d'une grue télescopique auto-grimpante et d'éléments horizontaux télescopiques de renforcement pour le montage de mâts préfabriqués en béton, conformément à la Revendication 1, étant précisé que le bras horizontal associé au cabestan (5) est formé par un tube externe (6) rattaché au cabestan (5) et un tube interne (7) avec la poulie (9) à une extrémité, ledit tube interne (7) étant capable de se déplacer horizontalement par rapport au tube externe (6) grâce à un ou plusieurs actionneurs (8).

3. Combinaison d'une grue télescopique auto-grimpante et d'éléments horizontaux télescopiques de renforcement pour le montage de mâts préfabriqués en béton, conformément à la Revendication 1, étant précisé que le bras horizontal associé au un cabestan (5) est formé par un tube (11) avec la poulie (9) à une extrémité, l'inclinaison du tube étant variable, grâce à un dispositif de rotation, par rapport au cabestan (5) avec un ou plusieurs actionneurs (12).

4. Combinaison d'une grue télescopique auto-grimpante et d'éléments horizontaux télescopiques de renforcement pour le montage de mâts préfabriqués en béton, conformément à la Revendication 1, étant précisé qu'elle comporte une plateforme de travail (19) qui se déplace verticalement et horizontalement, associée à la colonne verticale externe (1) au moyen d'un collier (20) et d'un moyen de redressement mécanique (21).

5. Procédé de montage d'un mât préfabriqué en béton avec la combinaison grue télescopique auto-grimpante et éléments horizontaux télescopiques de renforcement conformément à l'une quelconque des Revendications précédentes, **caractérisé en ce qu'**il comprend une première phase de montage de la grue, une seconde phase de montage de la première section du mât, une troisième phase de redressement de la grue, une quatrième phase de montage de la section suivante du mât, une cinquième phase de levage de la grue, la troisième phase et la quatrième phase étant répétées pour chacune des sections du mât, et une dernière sixième phase de démontage de la grue, étant précisé que la quatrième phase de montage de la section suivante du mât comprend, dans une première étape, l'extension au maximum du bras horizontal associé au cabestan (5), dans une deuxième étape, le redressement partiel d'un élément préfabriqué en béton (17) guidé au niveau de sa partie inférieure par un ou plusieurs rouleaux (18) disposés sur la partie inférieure intérieure et glissant le long d'un rail-guide ou de rails-guides (16) disposés verticalement sur la paroi externe d'au moins un des éléments préfabriqués en béton (14) de la section inférieure, dans une troisième étape optionnelle, le soutien de la partie supérieure des éléments préfabriqués en béton (17) sur la colonne verticale interne (2) au moyen d'un élément de renforcement (15) et d'un collier coulissant (22), dans une quatrième étape, le redressement total de l'élément préfabriqué en béton (17) au-dessus de l'élément préfabriqué en béton (14) de la section inférieure, le rouleau (18) quittant les rails-guides (16), dans une cinquième étape, le soutien de la partie inférieure de l'élément préfabriqué en béton (17) sur la colonne verticale interne (2) au moyen d'un élément de renforcement (15) et d'un collier coulissant (22), dans une sixième étape, la rotation de l'élément préfabriqué en béton (17) par la rotation du cabestan (5) et du bras horizontal jusqu'à ce que l'élément préfabriqué en béton (17) soit placé dans sa position, dans une septième étape, la descente de l'élément préfabriqué en béton (17) jusqu'à ce qu'il repose sur l'élément préfabriqué en béton (14) de la section inférieure, les étapes précédentes étant répétées jusqu'à ce que la section soit complète, au moins un des éléments préfabriqués en béton (17) présentant en outre un ou plusieurs rails-guides (16) disposés verticalement sur sa paroi externe.

6. Procédé de montage d'un mât préfabriqué en béton conformément à la Revendication 5, étant précisé que la première phase de montage de la première section du mât comprend la fixation du support (4) de la colonne verticale externe (1) à la base en béton (13), puis l'assemblage du reste des éléments qui forment la grue, dans la position de hauteur minimale avec la colonne verticale interne (2) entièrement insérée dans la colonne verticale externe (1) à l'aide d'une autre petite grue conventionnelle externe.

7. Procédé de montage d'un mât préfabriqué en béton conformément à la Revendication 5, étant précisé que la seconde phase de montage de la première section du mât comprend l'empilage des éléments préfabriqués en béton (14) dont la partie supérieure est soutenue par des éléments horizontaux télescopiques de renforcement (15) sur la partie supérieure de la colonne verticale externe (1) de sorte qu'ils forment la section du mât autour de la grue et que la grue reste à l'intérieur.

8. Procédé de montage d'un mât préfabriqué en béton conformément à la Revendication 5, étant précisé que la troisième phase de redressement de la grue comprend l'extension télescopique de la colonne verticale interne (2) à l'intérieur de la colonne verticale externe (1) grâce aux actionneurs (3) jusqu'à ce que sa hauteur maximale soit atteinte.

9. Procédé de montage d'un mât préfabriqué en béton conformément à la Revendication 5, étant précisé que la cinquième phase de levage de la grue comprend une première étape de dépose des éléments de renforcement (15) et du collier (22) situés sur la partie supérieure des éléments préfabriqués en béton (14) de la section inférieure et sur la partie inférieure des éléments préfabriqués en béton (17) de la section supérieure, ainsi que le déverrouillage du support (4) de la base (13), une deuxième étape de redressement de la colonne verticale externe (1) au moyen des actionneurs (3), tout en maintenant la colonne verticale interne (2) fixée en son sommet avec le reste des éléments de renforcement (15) jusqu'à ce que le support se trouve à la hauteur de la partie supérieure de la première section, une troisième étape de placement de la plateforme (23) au sommet du segment inférieur du mât et une quatrième étape de fixation du support (4) à la plateforme (23).

10. Procédé de montage d'un mât préfabriqué en béton conformément à la Revendication 5, étant précisé que la sixième phase de démontage de la grue comprend le déverrouillage du support (4) de la base (13), la dépose des éléments de renforcement (15) et des colliers (22) restants et la dépose du reste des éléments de la grue et de la plateforme (23) du dernier segment du mât en utilisant une grue externe conventionnelle, puis leur dépose sur le sol.

11. Procédé de montage d'un mât préfabriqué en béton conformément à la Revendication 5, étant précisé que la sixième phase de démontage de la grue comprend une étape de montage d'une structure de grue auxiliaire (25) avec une partie supérieure pivotante (26) sur l'extérieur du dernier segment supérieur du mât, suivie d'une étape de déverrouillage du support (4) de la base (13), de dépose des éléments de renforcement (15) et des colliers (22) restants et de dépose du reste des éléments de la grue et de la plateforme (23) du dernier segment du mât au moyen de la structure de grue auxiliaire (25), suivie d'une étape de levage et de montage de la nacelle (35) et des pales (36) au moyen de ladite structure de grue auxiliaire (25) et se terminant par une étape de démontage de la structure de grue auxiliaire (25).

12. Procédé de montage d'un mât préfabriqué en béton conformément à la Revendication 11, étant précisé que l'étape de montage d'une structure de grue auxiliaire (25) sur l'extérieur du dernier segment supérieur du mât comprend une étape d'extension télescopique de la colonne verticale interne (2) à l'intérieur de la colonne verticale externe (1) au moyen des actionneurs (3) jusqu'à ce que sa hauteur maximale soit atteinte, suivie d'une étape d'extension du bras horizontal associé au cabestan (5) dans sa position d'extension maximale, puis d'une étape de redressement de la structure de grue auxiliaire (25) guidée, en sa partie inférieure, par un ou plusieurs rouleaux (18) disposés sur la partie inférieure interne et coulissant le long d'un rail-guide ou de rails-guides (16), suivie par une étape de fixation de la structure de grue auxiliaire (25) à une ou plusieurs plaques-supports (24) qui sont insérées dans la face externe des éléments préfabriqués en béton (17) de la section supérieure, maintenant un distance de séparation par rapport au mât et, se terminant, dans le cas d'une structure de grue à deux bras, par une étape d'ouverture de deux bras (26, 27) de la structure de grue auxiliaire (25), précédemment pliés par le dispositif de rotation (30), pendant la montée, le montage du cabestan double (31) près de la base du mât et fixé à la base en béton (13), et l'insertion des câbles dans les poulies (29) ou, dans le cas où il s'agit d'une structure de grue avec bras horizontal, par une étape de montage du bras horizontal (32), des contrepoids (33) et du cabestan mobile (34).

13. Procédé de montage d'un mât préfabriqué en béton conformément à la Revendication 11, étant précisé que l'étape de levage et de montage de la nacelle (35) et des pales (36) comprend une première étape de levage de la nacelle (35) le long du côté du mât au moyen de la structure de grue auxiliaire (25), une seconde étape de positionnement au sommet du mât et sa fixation, une troisième étape de rotation latérale de la nacelle (35), suivie d'une étape de levage de chacune des pales (36), également avec la structure de grue auxiliaire (25), et de montage sur la nacelle (35).

14. Procédé de montage d'un mât préfabriqué en béton conformément à la Revendication 11, étant précisé que l'étape de démontage de la structure de grue auxiliaire (25) comprend une étape de fixation d'une poulie de renvoi (37) sur le sommet du mât, à proximité de la structure de grue auxiliaire (25), une seconde étape de pliage des deux bras (26, 27) ou du bras horizontal (32), une troisième étape de fixation au moyen d'un câble entre la structure de grue auxiliaire (25) et le cabestan auxiliaire (38) dans la nacelle, ou le double cabestan (31), une quatrième étape de déverrouillage de la structure de grue auxiliaire (25) de la plaque-support ou des plaques-supports (24) et, pour finir, une cinquième étape de descente de la structure de grue auxiliaire (25), guidée en sa partie inférieure par un ou plusieurs rouleaux (18) disposés sur la partie inférieure interne et coulissant le long d'un rail-guide ou de rails-guides (16) jusqu'à atteindre le sol.
